# EUROPEAN PATENT APPLICATION

(11) **EP 4 808 191 A1**
(43) Date of publication of application: **16.09.2026**
(21) Application number: 23957993.1
(22) Date of filing: 09.11.2023
(51) Int. Cl.: H04W 24/08

(54) **COMMUNICATION PROCESSING METHOD AND APPARATUS**

(71) Applicant: Beijing Xiaomi Mobile Software Co., Ltd., Beijing 100085 (CN)
(72) Inventor: WU, Yumin, Beijing 100085 (CN); XIONG, Yi, Beijing 100085 (CN)
(74) Representative: Stöckeler, Ferdinand
(86) International application number: PCT/CN2023/130776
(87) International publication number: WO 2025/097385

(57) **Abstract**

The present disclosure relates to the technical field of communications, and provides a communication processing method and apparatus. The method comprises: on the basis of a first TA, a terminal determines a TA of the terminal in a target cell corresponding to a first candidate configuration, wherein the first TA is a TA for the target cell measured by the terminal. By applying the technical solution of the present disclosure, when a cell configuration of the terminal is changed to a specific candidate configuration, the TA for the target cell, corresponding to the candidate configuration, measured by the terminal is used to determine the TA of the terminal in the target cell, that is, the TA for the target cell measured by the terminal is used to determine uplink timing of the terminal in the target cell.

## Description

### TECHNICAL FIELD

The disclosure relates to the field of communication technology, and in particular to a communication processing method and a communication processing apparatus.

### BACKGROUND

A network device may provide one or more candidate configurations to a terminal, and one candidate configuration may include one or more "cells or cell groups". The network device may subsequently control the terminal to change across a plurality of "candidate configurations" through L1 or L2 signaling to achieve a serving cell change. The control signaling may be called as "cell change control signaling". The procedure may also be called as LTM (L1/L2-triggered Mobility) procedure.

### SUMMARY

The disclosure provides a communication processing method and a communication processing apparatus, which may realize that when a cell configuration of a terminal is changed to a specific candidate configuration, a timing advance (TA) of a terminal in a target cell is determined using a TA for the target cell corresponding to the candidate configuration measured by the terminal. That is, uplink timing of the terminal in the target cell is determined using the TA for the target cell measured by the terminal.

In a first aspect, a communication processing method is provided in embodiments of the disclosure. The method includes: determining, based on a first TA, a TA of a terminal in a target cell corresponding to a first candidate configuration; in which the first TA is a TA for the target cell measured by the terminal.

In some embodiments of the disclosure, determining, based on the first TA, the TA of the terminal in the target cell corresponding to the first candidate configuration includes: checking, according to a protocol agreement or a network configuration, that a cell configuration of the terminal is changed to the first candidate configuration, and determining, based on the first TA, the TA of the terminal in the target cell.

In some embodiments of the disclosure, checking, according to the protocol agreement or the network configuration, that the cell configuration of the terminal is changed to the first candidate configuration, and determining, based on the first TA, the TA of the terminal in the target cell includes: determining, according to a source cell of the terminal and the target cell belonging to the same configuration group, that the terminal adopts the first TA as uplink timing for the target cell.

In some embodiments of the disclosure, checking, according to the protocol agreement or the network configuration, that the cell configuration of the terminal is changed to the first candidate configuration, and determining, based on the first TA, the TA of the terminal in the target cell includes: determining, according to received first information, that the terminal adopts the first TA as uplink timing for the target cell, in which the first information includes one of: cell change control signaling, in which the cell change control signaling includes indication information instructing the terminal to adopt the first TA as the uplink timing for the target cell; control signaling instructing the terminal to start measuring the first TA; or a triggering event instructing the terminal to start measuring the first TA.

In some embodiments of the disclosure, the triggering event includes one of: a signal measurement result of the target cell being greater than or equal to a first threshold value configured by a network; a signal measurement result of a source cell of the terminal being less than or equal to a second threshold value configured by a network; a signal measurement result of the target cell being greater than or equal to a third threshold value configured by a network, and a signal measurement result of a source cell being less than or equal to a fourth threshold value configured by the network; or a difference between a signal measurement result of the target cell and a signal measurement result of a source cell being greater than or equal to a difference configured by a network.

In some embodiments of the disclosure, the target cell includes one of: a primary cell (PCell) corresponding to a master cell group (MCG) after an MCG change; a primary secondary cell (PSCell) corresponding to a secondary cell group (SCG) after an SCG change; or a changed cell specified by a network configuration.

In some embodiments of the disclosure, a source cell of the terminal includes one of: a PCell corresponding to an MCG before an MCG change; a PSCell corresponding to an SCG before an SCG change; a PCell corresponding to a current serving MCG; a PSCell corresponding to a current serving SCG; or a pre-change cell specified by a network configuration.

In some embodiments of the disclosure, the method further includes: determining a start time point of an uplink synchronization timer corresponding to the first TA.

In some embodiments of the disclosure, determining the start time point of the uplink synchronization timer corresponding to the first TA includes: determining the start time point of the uplink synchronization timer corresponding to the first TA according to an n-th time unit after the terminal receives second information; where n is a non-negative integer, and the second information includes one of: cell change control signaling; or control signaling instructing the terminal to start measuring the first TA.

In some embodiments of the disclosure, determining the start time point of the uplink synchronization timer corresponding to the first TA according to the n-th time unit after the terminal receives the second information includes: acquiring, by the terminal, the first TA, and determining the start time point of the uplink synchronization timer corresponding to the first TA according to the n-th time unit after the terminal receives the second information.

In some embodiments of the disclosure, determining the start time point of the uplink synchronization timer corresponding to the first TA includes: determining the start time point of the uplink synchronization timer corresponding to the first TA according to an m-th time unit after the terminal fulfills a cell change trigger condition; where m is a non-negative integer.

In some embodiments of the disclosure, the time unit includes one of: a symbol; a slot; a subframe; a system frame; or a millisecond.

In some embodiments of the disclosure, the method further includes: indicating to a network the start time point of the uplink synchronization timer corresponding to the first TA.

In some embodiments of the disclosure, the method further includes: determining an execution time interval during which the terminal measures the first TA.

In some embodiments of the disclosure, determining the execution time interval during which the terminal measures the first TA includes: continuously measuring, by the terminal, a latest first TA for the target cell before the terminal performs a cell change successfully.

In some embodiments of the disclosure, determining the execution time interval during which the terminal measures the first TA includes: continuously measuring, by the terminal, a latest first TA for the target cell within a first time period configured by a network.

In some embodiments of the disclosure, the method further includes: determining that the terminal fails to acquire the first TA, and triggering the terminal to perform recovery.

In some embodiments of the disclosure, determining that the terminal fails to acquire the first TA includes one of: the terminal failing to acquire the first TA within a second time period configured by the network; the terminal failing to acquire the first TA during a cell change process; a measured signal quality of the target cell being below a fifth threshold; a time alignment timer (TAT) corresponding to the first TA expiring; or a TAT corresponding to a second TA of the terminal in a source cell expiring.

In some embodiments of the disclosure, triggering the terminal to perform recovery includes one of: triggering the terminal to access the target cell using a random access process; triggering the terminal to perform connection reestablishment; triggering the terminal to perform a cell change using a second candidate configuration, wherein the second candidate configuration is different from the first candidate configuration; or triggering the terminal to report failure information to a network.

In some embodiments of the disclosure, the failure information includes at least one of: an indication of a failure to acquire the first TA; a cause of a failure to acquire the first TA; an indication of whether a second TA of the terminal in a source cell is invalid; a cause of a second TA being invalid; an identifier of the target cell; an identifier of a source cell; an identifier of the first candidate configuration; or an indication of whether a downlink reception timing difference between a source cell and the target cell is acquired.

In some embodiments of the disclosure, the method further includes: triggering the terminal to stop measuring the first TA.

In some embodiments of the disclosure, determining the first TA includes: determining the first TA according to a second TA of the terminal in a source cell and a downlink reception timing difference between the source cell and the target cell.

In some embodiments of the disclosure, the method further includes: receiving the first candidate configuration provided by a network.

In a second aspect, a communication processing method is provided in embodiments of the disclosure. The method includes: sending first information, in which the first information indicates to determine, based on a first TA, a TA of a terminal in a target cell corresponding to a first candidate configuration; in which the first TA is a TA for the target cell measured by the terminal.

In some embodiments of the disclosure, the first information includes one of: cell change control signaling, wherein the cell change control signaling comprises indication information instructing the terminal to adopt the first TA as the uplink timing for the target cell; control signaling instructing the terminal to start measuring the first TA; or a triggering event instructing the terminal to start measuring the first TA.

In some embodiments of the disclosure, the triggering event includes one of: a signal measurement result of the target cell being greater than or equal to a first threshold value configured by a network; a signal measurement result of a source cell of the terminal being less than or equal to a second threshold value configured by a network; a signal measurement result of the target cell being greater than or equal to a third threshold value configured by a network, and a signal measurement result of a source cell being less than or equal to a fourth threshold value configured by the network; or a difference between a signal measurement result of the target cell and a signal measurement result of a source cell being greater than or equal to a difference configured by a network.

In some embodiments of the disclosure, the target cell includes one of: a primary cell (PCell) corresponding to an MCG after an MCG change; a primary secondary cell (PSCell) corresponding to an SCG after an SCG change; or a changed cell specified by a network configuration.

In some embodiments of the disclosure, a source cell of the terminal includes one of: a PCell corresponding to an MCG before an MCG change; a PSCell corresponding to an SCG before an SCG change; a PCell corresponding to a current serving MCG; a PSCell corresponding to a current serving SCG; or a pre-change cell specified by a network configuration.

In some embodiments of the disclosure, the method further includes: receiving a start time point of an uplink synchronization timer corresponding to the first TA indicated by the terminal.

In some embodiments of the disclosure, the method further includes: receiving failure information reported by the terminal.

In some embodiments of the disclosure, the failure information includes at least one of: an indication of a failure to acquire the first TA; a cause of a failure to acquire the first TA; an indication of whether a second TA of the terminal in a source cell is invalid; a cause of a second TA being invalid; an identifier of the target cell; an identifier of a source cell; an identifier of the first candidate configuration; or an indication of whether a downlink reception timing difference between a source cell and the target cell is acquired.

In some embodiments of the disclosure, the method further includes: providing the first candidate configuration to the terminal.

In a third aspect, a communication processing apparatus is provided in embodiments of the disclosure. The apparatus includes: a first communication module, configured to determine, based on a first TA, a TA of a terminal in a target cell corresponding to a first candidate configuration; in which the first TA is a TA for the target cell measured by the terminal.

In a fourth aspect, a communication processing apparatus is provided in embodiments of the disclosure. The apparatus includes: a second communication module, configured to send first information, in which the first information indicates to determine, based on a first TA, a TA of a terminal in a target cell corresponding to a first candidate configuration; in which the first TA is a TA for the target cell measured by the terminal.

In a fifth aspect, a communication processing system is provided in embodiments of the disclosure. The system includes a terminal and a network device. The terminal is configured to perform the method as described in the first aspect, and the network device is configured to perform the method as described in the second aspect.

In a sixth aspect, a communication device is provided in embodiments of the disclosure. The communication device includes a transceiver; a memory; a processor, coupled to the transceiver and the memory, configured to execute computer executable instructions on the memory, control wireless signal reception and transmission of the transceiver, and capable of implementing the methods as described in embodiments of the first aspect or embodiments of the second aspect.

In a seventh aspect, a computer storage medium is provided in embodiments of the disclosure. The computer storage medium is configured to store computer executable instructions which, when executed by a processor, cause the method as described in embodiments of the first aspect or embodiments of the second aspect to be implemented.

Embodiments of the disclosure provide the communication processing method and the communication processing apparatus. The terminal determines, based on the first TA, the TA of the terminal in the target cell corresponding to the first candidate configuration, in which the first TA is the TA for the target cell measured by the terminal. By applying the technical solution of this embodiment, when the cell configuration of the terminal is changed to the specific candidate configuration, the TA of the terminal in the target cell is determined using the TA for the target cell corresponding to the candidate configuration measured by the terminal. That is, the uplink timing of the terminal in the target cell is determined using the TA for the target cell measured by the terminal.

Additional aspects and advantages of the present disclosure will be partially given in the following description, and some will become obvious from the following description, or be understood through practice of the present disclosure.

### BRIEF DESCRIPTION OF THE DRAWINGS

The above and/or additional aspects and advantages of the disclosure will be apparent and easily understood from the following embodiments described in combination with the accompanying drawings, in which:
FIG. 1 is a schematic diagram illustrating a structure of a communication processing system according to an embodiment of the disclosure.
FIG. 2 is a schematic diagram illustrating a time sequence of a communication processing method according to an embodiment of the disclosure.
FIG. 3 is a schematic diagram illustrating an example of a method for calculating a TA according to an embodiment of the disclosure.
FIG. 4 is a flowchart illustrating a communication processing method according to an embodiment of the disclosure.
FIG. 5 is a flowchart illustrating a communication processing method according to an embodiment of the disclosure.
FIG. 6 is a block diagram illustrating a communication processing apparatus according to an embodiment of the disclosure.
FIG. 7 is a block diagram illustrating a communication processing apparatus according to an embodiment of the disclosure.
FIG. 8 is a schematic diagram illustrating a structure of a communication device according to an embodiment of the disclosure.
FIG. 9 is a schematic diagram illustrating a structure of a chip according to an embodiment of the disclosure.

### DETAILED DESCRIPTION

Embodiments of the present disclosure are described in detail below, examples of which are shown in the drawings, wherein the same or similar reference numerals denote the same or similar elements or elements having the same or similar functions throughout. The embodiments described below by referring to the figures are exemplary, and are intended to explain the present disclosure, and should not be construed as limiting the present disclosure. It is noted that embodiments of the present disclosure and features in the embodiments may be combined with each other without conflict.

Embodiments of the disclosure provide a communication processing method. In some embodiments, terms "communication processing method", "information processing method", and "communication method" may be interchangeable, and terms "communication processing apparatus", "information processing apparatus" and "communication device" may be interchangeable. Moreover, terms "communication processing system", "information processing system", and "communication system" may be interchangeable.

Not all of the embodiments of the disclosure are provided in the disclosure, only some embodiments are illustrated below and they are not taken as specific limitations on the protection scope of the disclosure. Without contradiction, in an embodiment, each step may be implemented as an independent embodiment, and steps can be combined arbitrarily. For example, any solution after removing some steps in the embodiment may be implemented as an independent embodiment. The steps in the embodiment may be performed in different orders, and optional implementations of the embodiment can be combined arbitrarily. In addition, the embodiments of the disclosure may also be combined arbitrarily. For example, some or all the steps of different embodiments can be combined arbitrarily, and each embodiment can be arbitrarily combined with optional implementations of other embodiments.

In the embodiments of the disclosure, unless there are special explanations and/or logical conflicts, terms and/or descriptions of the embodiments are consistent and can refer to each other. Technical features in different embodiments can be combined as new embodiments according to their inherent logical relations.

Terms used in the embodiments of the disclosure are only for the purpose of describing specific embodiments, and are not considered as limitations to the disclosure.

In the embodiments of the disclosure, unless otherwise specified, an element expressed in a singular form through "a", "an" "the" "the above", "said", "the above described" or "this", is interpreted as that there is "one and only one", "one or more" or "at least one" of such element. For example, when an article, e.g., "a", "an" or "the" in English, is used in translation, a noun after the article can be interpreted in a singular form or in a plural form.

In the embodiments of the disclosure, "a plurality of" refers to "two or more".

In some embodiments, terms "at least one of", "one or more", "a plurality of" and "multiple" are interchangeable.

In some embodiments, expressions such as "at least one of A or B", "A and/or B", "in a case A, in another case B", and "in response to a case A, in response to another case B" in the present disclosure, depending on situations, may include at least one of the following solutions: performing A in some implementations (performing A independently of B); performing B in some implementations (performing B independently of A); selecting one of A or B for execution in some implementations (selectively performing A or B); and performing A and B in some implementations (performing both A and B). The similar principle applies when there are more parts such as A, B, C, etc.

In some embodiments, expressions such as "A or B", depending on situations, may include the following technical solutions: performing A in some implementations (performing A independently of B); performing B in some implementations (performing B independently of A); and selecting one of A or B for execution in some implementations (selectively performing A or B). The similar principle applies when there are more parts such as A, B, C, etc.

The terms such as "first" and "second" added in front of other words in the embodiments of the present disclosure are used solely to distinguish different described objects and do not limit a position, a sequence, a priority, a quantity, or content of the described objects. For a statement regarding the described object, reference may be made to claims or descriptions in the context of embodiments and should not constitute other restrictions due to the use of the above terms in front of other words. For example, if the described object is "field", ordinal numbers before the "field" in "first field" and "second field" do not limit a position or a sequence between fields. "First" and "second" do not limit whether modified "fields" are in the same message, nor do an order of the "first field" and the "second field." For another example, if the described object is "level", ordinal numbers before the "level" in "first level" and "second level" do not limit a priority between levels. Furthermore, a quantity of described objects is not limited by the ordinal numbers, which may be one or more. Taking "first apparatus" as an example, there may be one or more "apparatus". In addition, objects modified by different words may be the same or different. For example, if the described object is an "apparatus", "first apparatus" and "second apparatus" may be the same apparatus or different apparatuses, and their types may be the same or different. Similarly, if the described object is "information", "first information" and "second information" may be same information or different information, and their content may be the same or different.

In some embodiments, terms such as "in response to...", "in response to determining...", "in a case that...", "when...", "upon", "while", "if..." etc. may be used interchangeably.

In some embodiments, the terms such as "greater than", "greater than or equal to", "not less than", "more than", "more than or equal to", "not fewer than", "higher than", "higher than or equal to", "not lower than", "above", etc. may be used interchangeably. The terms such as "less than", "less than or equal to", "not greater than", "fewer than", "fewer than or equal to", "not more than", "lower than", "lower than or equal to", "not higher than", "below" etc. may also be used interchangeably.

In some embodiments, "apparatus" may be interpreted as either physical or virtual. Names are not limited to those recorded in the embodiments. The terms such as "apparatus", "equipment", "device", "circuit", "network element", "node", "function", "unit", "section", "system", "network", "chip", "chip system", "entity", "subject", etc. may be used interchangeably.

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)", etc. may be used interchangeably.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc. may be used interchangeably.

In some embodiments, "obtain", "acquire", "get", "receive", "transmit", "bidirectional transmission", "send and/or receive" may be interchangeable, and may be interpreted as many meanings such as receiving from other entities, obtaining from a protocol, obtaining from a higher layer, obtaining by self-processing, autonomous implementation, etc.

In some embodiments, the terms such as "send", "emit", "report", "issue", "transmit", "bidirectionally transmit", "send and/or receive" and the like may be used interchangeably.

In some embodiments, "predetermined" or "preset" may be interpreted as being pre-specified in a protocol, etc., or may be interpreted as a pre-set action performed by an apparatus, etc.

In some embodiments, "determining" may be interpreted as "judging", "deciding", "judging", "calculating", "computing", "processing", "deriving", "investigating", "searching", "looking up", "searching", "inquiring", "ascertaining", "receiving", "transmitting", "inputting", "outputting, "accessing", "resolving", "selecting", "choosing", "establishing", "comparing", "assuming", "expecting", "considering", "broadcasting", "notifying", "communicating", "forwarding", "configuring", "reconfiguring", "allocating", "mapping", "assigning", etc., but is not limited to the above.

In some embodiments, determination or judgment may be performed by a value represented by 1 bit (0 or 1), or by a true/false value (Boolean value) represented by true or false, or by comparison of numerical values (for example, comparison with a predetermined value), but is not limited thereto.

In some embodiments, "network" may be interpreted as apparatuses included in the network (e.g., access network device, core network device, etc.).

In some embodiments, "not expecting to receive" may be interpreted as not receiving on time domain resources and/or frequency domain resources, or as not performing subsequent processing on the data after receiving the data; "not expecting to send" may be interpreted as not sending, or as sending but not expecting the recipient to respond to the sent content.

In some embodiments, acquisition of data, information, etc. may comply with the laws and regulations of the country where the data is obtained.

In some embodiments, data, information, etc. may be obtained with consent from users.

In some embodiments, a threshold mentioned in embodiments may be a numerical value, a constant, or some fixed value, etc.

In addition, each element, each row, or each column in a table of embodiments of the present disclosure may be implemented as an independent embodiment, and a combination of any elements, any rows, and any columns may also be implemented as an independent embodiment.

A network device may provide one or more candidate configurations to a terminal, where one candidate configuration may include one or more "cells or cell groups". The network device may subsequently control the terminal to change across a plurality of "candidate configurations" via L1 or L2 signaling to achieve a serving cell change. For example, the L1 signaling is sent via downlink control information (DCI), or the L2 signaling is sent via a media access control (MAC) control element (CE) to change a working cell from "cell-1" to "cell-2". This control signaling may be called as "cell change control signaling". The procedure may also be called as an LTM (L1/L2-triggered Mobility) procedure.

In addition, the terminal may also be based on a "preconfigured condition" of a network and a "preconfigured cell or cell group" corresponding to the condition. In a case where the terminal satisfies the "preconfigured condition" (such as a specific measurement event), the terminal changes the service cell or cell group to the "preconfigured cell or cell group". The "condition-triggered mobility procedure" includes: conditional handover (CHO); conditional primary secondary cell or cell group (PSCell) addition (CPA); conditional PSCell change (CPC). The terminal may also change, according to a network indication, a specific cell or cell group configuration after the "preconfigured condition" is satisfied. For example, a primary cell (PCell) configuration of the terminal is changed from candidate cell or cell group configuration-1 to candidate cell or cell group configuration-2.

In a case where the network configures the terminal to acquire a timing advance (TA) for a target cell during a mobility procedure (such as PCell or PSCell change) using "terminal measurement-based TA calculation", how to control the terminal to use the "terminal measurement-based TA calculation" under what situation is a problem to be solved.

To this end, an embodiment provides a communication processing method and a communication processing apparatus, which may realize that when a cell configuration of a terminal is changed to a specific candidate configuration, a TA of a terminal in a target cell is determined using a TA for the target cell corresponding to the candidate configuration measured by the terminal. That is, uplink timing of the terminal in the target cell is determined using the TA for the target cell measured by the terminal.

The communication processing method and the communication processing apparatus provided by the present disclosure are introduced in detail below with reference to the accompanying drawings.

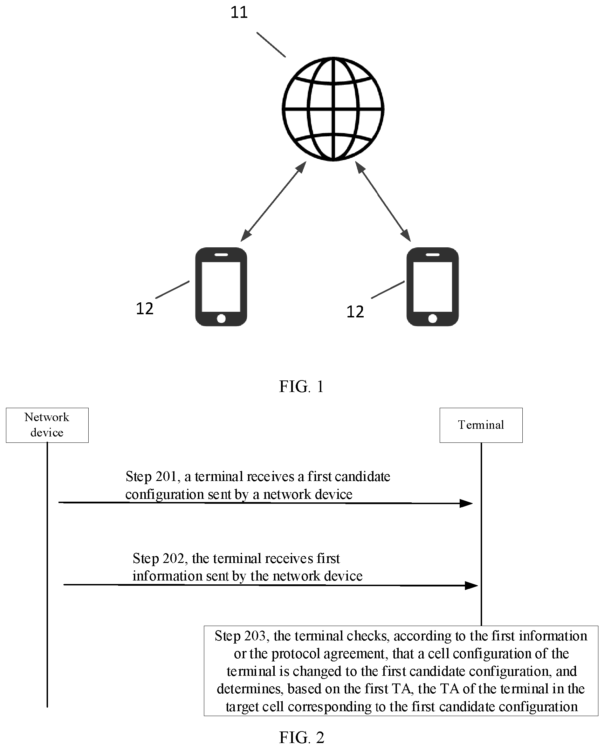

FIG. 1 is a schematic diagram illustrating a structure of a communication processing system according to an embodiment of the disclosure. As illustrated in FIG. 1, a communication architecture may include a network device 11 and a terminal 12.

The network device 11 is an entity on a network side for transmitting or receiving signals. For example, the network device 11 may be an evolved NodeB (eNB), a transmission reception point (TRP), a next generation NodeB (gNB) in a NR system, a base station in other future mobile communication systems, or an access node in a wireless fidelity (WiFi) system. The specific technology and specific device form adopted by the network device are not limited in the embodiments of the disclosure. The network device 11 according to the embodiments of the disclosure may be composed of a central unit (CU) and distributed units (DUs). The CU may also be referred to as a control unit. The use of CU-DU structure allows to divide a protocol layer of the network device, such as a base station, such that some of the protocol layer functions are placed in the CU for centralized control, and some or all of the remaining protocol layer functions are distributed in the DUs, and the DUs are centrally controlled by the CU.

The terminal 12 may also be referred to as a terminal, a user equipment (UE), a mobile station (MS), a mobile terminal (MT), and the like. The terminal 12 can be a car with communication functions, a smart car, a mobile phone, a wearable device, a Pad, a computer with wireless transceiver functions, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc. The specific technology and specific device form adopted by the terminal 12 are not limited in the embodiments of the disclosure.

It may be understood that the communication system described in the embodiments of the disclosure aims to more clearly illustrate the technical solution of the embodiments of the disclosure, and does not constitute a limitation on the technical solution disclosed in the embodiments of the disclosure. A person skilled in the art may know that with the evolution of the system architecture and the emergence of new service scenarios, the technical solution disclosed in the embodiments of the disclosure are also applicable to similar technical problems.

The following embodiments of the disclosure may be applied to the communication system 100 or part of the subjects shown in FIG. 1, but are not limited herein. The subjects shown in FIG. 1 are examples, and the communication system may include all or part of the subjects in FIG. 1, or may include other subjects other than those shown in FIG. 1. The number and form of the subjects are arbitrary. The subjects may be physical or virtual. The connection relationship between the subjects is an example. The subjects may be connected or disconnected, and the connection may be in any manner, which may be a direct connection or an indirect connection, or may be a wired connection or a wireless connection.

The embodiments of the disclosure may be applied to long-term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-Wideband (UWB), Bluetooth (registered trademark), a public land mobile network (PLMN) network, a device-to-device (D2D) system, a machine-to-machine (M2M) system, an Internet of Things (IoT) system, vehicle-to-everything (V2X), systems using other communication methods, and next-generation systems based on them. In addition, the plurality of systems may also be combined (for example, a combination of LTE or LTE-A and 5G, etc.) for application.

In some embodiments, the network device 11 may send first information to the terminal 12. The first information indicates to determine, based on a first TA, a TA of the terminal 12 in a target cell corresponding to a first candidate configuration (such as a specific candidate configuration). The first TA is a TA for the target cell measured by the terminal 12. Further, in a case where a cell configuration is changed to the first candidate configuration, the terminal 12 determines, according to the first information, to take the first TA as the TA of the terminal 12 in the target cell, namely uplink timing of the terminal 12 in the target cell,

An embodiment provides a solution for processing uplink timing, which may realize that when the cell configuration of the terminal is changed to the specific candidate configuration, the TA of the terminal in the target cell is determined using the TA for the target cell corresponding to the candidate configuration measured by the terminal. That is, uplink timing of the terminal in the target cell is determined using the TA for the target cell measured by the terminal.

Further, in order to illustrate a specific execution process of the above communication processing system, FIG. 2 is a schematic diagram illustrating a time sequence of a communication processing method according to an embodiment of the disclosure. The method may be configured in the above communication processing system, as illustrated in FIG. 2. The method may include step 201 to step 203.

At step 201, a terminal receives a first candidate configuration sent by a network device.

In some embodiments, the network device may provide one or more candidate configurations to the terminal. For example, the network device may send these candidate configurations to the terminal via an RRCReconfiguration message. One candidate configuration may include one or more cell or cell group configurations. The first candidate configuration may be considered to as a specific candidate configuration among these candidate configurations, or may be any candidate configuration among these candidate configurations, etc.

A purpose of the candidate configuration may include at least one of the following purposes (purpose 1 and purpose 2).

Purpose 1: the network device may subsequently control the terminal to change across a plurality of candidate cells or cell groups via signaling, such as dynamic cell or cell group change in the aforementioned content.

Purpose 2: in a case where a triggering condition of a network configuration or a protocol agreement is satisfied, the terminal may change a configuration to a candidate cell or cell group configuration. For example, in a case where the terminal measures that an A3 or A5 event is satisfied, a service master cell group (MCG) group configuration is changed to a candidate MCG configuration, such as a condition-triggered mobility procedure in the aforementioned content.

The method of an embodiment is also applicable to a scenario of dual connectivity (DC), which may include two cells or two cell groups for example. The two cell groups include an MCG and a secondary cell group (SCG). The MCG corresponds to a master node (MN) on the network side, and the MCG includes one PCell and one or more secondary cells (SCell). The SCG corresponds to a secondary node (SN) on the network side, and the SCG includes one PSCell and one or more SCell. Here, the PCell and the PSCell may be collectively referred to as a special cell (SpCell).

At step 202, the terminal receives first information sent by the network device.

The first information may indicate to determine, based on a first TA, a TA of a terminal in a target cell corresponding to a first candidate configuration. The first TA is the TA for the target cell measured by the terminal.

That TA may be expressed as a timing advance, which means that: in order for an uplink signal sent by the terminal to reach the network device at a predetermined time, the terminal needs to send the uplink signal in advance. A time in advance for the terminal to send the uplink signal is determined according to the TA.

In some embodiments, a process of the terminal determining the first TA (or may be referred to as "terminal measurement-based TA calculation") may include: determining the first TA based on a second TA of a source cell of the terminal and a downlink reception timing difference between the source cell and the target cell.

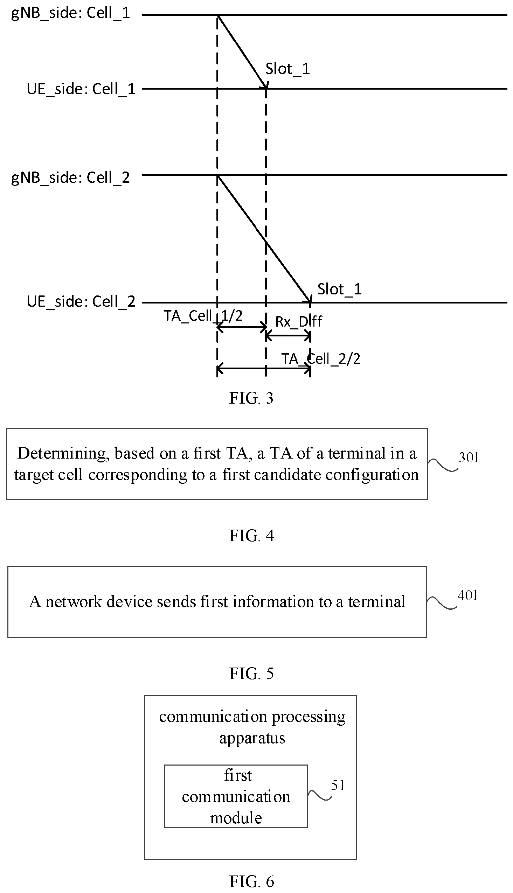

For example, the terminal may calculate and acquire the uplink timing of the terminal in cell 2 according to a downlink reception timing difference between cell 1 (such as the source cell) and cell 2 (such as the target cell) and the uplink timing of the terminal in cell 1. The specific calculation method may be shown in FIG. 3:
$\left(TA_Cell_2\right) / 2 = \left(TA_Cell_1\right) / 2 + Rx _ Diff$
where TA_Cell_1 denotes a TA value for cell 1, TA_Cell_2 denotes a TA value for cell 2, Rx_Diff denotes the downlink reception timing difference between cell 1 and cell 2.

In some embodiments, the first information may be a type of communication information, such as an indication information or a signaling, etc. For example, the first information may be carried and sent via a radio resource control (RRC) signaling and/or a media access control layer (MAC) control element (CE) and/or downlink control information (DCI).

In some embodiments, the first information may include one of the following items (A1 to A3).

A1: cell change control signaling, the cell change control signaling includes indication information instructing the terminal to adopt the first TA as the uplink timing for the target cell. For example, the first information may instruct the terminal to perform cell handover, and the first information may carry relevant information for indicating that when the cell configuration of the terminal is determined to be changed to the first candidate configuration, the terminal adopts the first TA as the uplink timing for the target cell corresponding to the first candidate configuration. For example, for "purpose 1", the network device indicates in the "cell change control signaling" whether the terminal is to adopt the "terminal measurement-based TA calculation" procedure for the target cell.

A2: control signaling for instructing the terminal to start measuring the first TA. For example, the network device sends additional control information (such as MAC CE or DCI, etc.) to instruct the terminal to start "terminal measurement-based TA calculation" for the target cell corresponding to a specific candidate configuration. Further, the control signaling may be sent before the mobility procedure is started. For example, for an LTM procedure, before the network device sends the cell change control signaling, the network device may send the control signaling to enable the terminal to calculate and acquire the TA value for the target cell.

A3: a triggering event for instructing the terminal to start measuring the first TA. For example, the terminal starts, according to the triggering event configured by the network, the "terminal measurement-based TA calculation" in a case where the triggering event is satisfied.

In some embodiments, the triggering event for instructing the terminal to start measuring the first TA includes one of the following items (B1 to B4).

B1: a signal measurement result of the target cell is greater than or equal to a first threshold value configured by a network. For example, a triggering event 1 is that a signal measurement result of a reference signal received power (RSRP) or a reference signal received quality (RSRQ) of the target cell is greater than or equal to the first threshold value configured by the network.

B2, a signal measurement result of a source cell of the terminal is less than or equal to a second threshold value configured by a network. For example, a triggering event 2 is that a signal measurement result of the RSRP or the RSRQ of the source cell of the terminal is less than or equal to the second threshold value configured by the network.

B3, a signal measurement result of the target cell is greater than or equal to a third threshold value configured by a network, and a signal measurement result of a source cell is less than or equal to a fourth threshold value configured by the network. For example, triggering event 3 is that the signal measurement result of the RSRP or the RSRQ of the target cell is greater than or equal to threshold value_1 configured by the network (the third threshold value, which may be the same as or different from the first threshold value), and the measurement result of the RSRP or the RSRQ of the source cell is less than or equal to threshold value_2 configured by the network (the fourth threshold value, which may be the same as or different from the second threshold value).

B4, a difference (offset) between a signal measurement result of the target cell and a signal measurement result of a source cell is greater than or equal to a difference configured by a network. For example, triggering event 4 is that the measurement result of the target cell is better than the measurement result of the source cell by the Offset configured by the network.

Further, in some embodiments, the above triggering events, or the threshold values corresponding to the trigger events, may be independently configured for each candidate cell that needs to measure the TA (per candidate Cell), or may be configured for whether the terminal starts the terminal measurement-based TA calculation procedure (per UE).

Furthermore, in some embodiments, for configurations of these trigger events, hysteresis values and trigger times, etc. may be configured.

In some embodiments, the target cell may include one of the following items (C1 to C3).

C1, a PCell corresponding to an MCG after an MCG change. For example, for an MCG change procedure (i.e., PCell change (or handover)), the "target cell" is a PCell of a "candidate configuration".

C2, a PSCell corresponding to an SCG after an SCG change. For example, for an SCG change procedure (i.e., PSCell change), the "target cell" is a PSCell of a "candidate configuration".

C3, a changed cell specified by a network configuration. For example, the "target cell" is a cell specified by the network configuration. For example, a network configuration Cell_1 adopts the "terminal measurement-based TA calculation" procedure.

In some embodiments, the source cell of the terminal may include one of the following items (D1 to D5).

D1, a PCell corresponding to an MCG before an MCG change. For example, for an MCG change procedure (i.e., PCell change (or handover)), the "source cell" is a serving PCell before the MCG change.

D2, a PSCell corresponding to an SCG before an SCG change. For example, for an SCG change procedure (i.e., PSCell change (or handover)), the "source cell" is a serving PSCell before the SCG change.

D3, a PCell corresponding to a current serving MCG.

D4, a PSCell corresponding to a current serving SCG.

D5, a pre-change cell specified by a network configuration. For example, the "source cell" is a cell specified by the network configuration. For example, the network configures a TA value of a serving cell Cell_1 (such as "TA_Cell_1" in FIG. 3), and the TA value is applied to the "terminal measurement-based TA calculation" procedure.

Further, in some embodiments, contents of a "identifier of a source cell" or a "identifier of a target cell" includes at least one of the following items (E1 to E4).

E1, a serving cell identifier (such as serving cell ID_1).

E2, an identifier of a cell group (such as an MCG or an SCG).

E3, a cell type identifier (such as PCell, PSCell, SpCell, or SCell).

E4, an SCell identifier (e.g., for a cell with a cell type being the SCell, it indicates the SCell ID_1).

At step 203, the terminal checks, according to the first information or the protocol agreement, that a cell configuration of the terminal is changed to the first candidate configuration, and determines, based on the first TA, the TA of the terminal in the target cell corresponding to the first candidate configuration.

In some embodiments, after a condition in the network configuration or the protocol agreement is satisfied, the terminal may start the "terminal measurement-based TA calculation" procedure.

In some embodiments, the terminal may adopt, according to the network configuration (first information) or the protocol agreement, the "terminal measurement-based TA calculation" procedure when performing a mobility procedure (cell handover) using the first candidate configuration (such as a specific candidate configuration). For example, the terminal calculates the "TA value of the target cell" (such as "TA_Cell_2" in FIG. 3) based on a "TA value of the source cell" (such as "TA_Cell_1" in FIG. 3) and a "downlink reception timing difference between the source cell and the target cell" (such as "Rx_Diff" in FIG. 3). And the "TA value of the target cell" is configured to send an uplink signal in the target cell.

In some embodiments, step 203 may specifically include: determining, according to a source cell of the terminal and the target cell belonging to the same configuration group, that the terminal adopts the first TA as uplink timing for the target cell.

For example, if the cell configuration of the terminal is changed to the first candidate configuration, it means that the cell handover procedure is in progress. In a case where the source cell of the terminal and the target cell corresponding to the first candidate configuration belong to the same configuration group, it may be determined that the terminal adopts the first TA as the uplink timing for the target cell.

For example, the cell configuration corresponding to the source cell and the candidate configuration corresponding to the target cell belong to the same configuration group, such as both belong to "configuration group_1", in which case the source cell and the target cell may be considered to belong to the same configuration group; or the source cell and the target cell belong to the same cell group. If the network device provides a cell list_1 (e.g., corresponding to "cell group_1"), the cell list_1 includes the identifier of the source cell and the identifier of the target cell, in which case the source cell and the target cell may be considered to belong to the same configuration group.

In some embodiments, step 203 may specifically include: determining, according to the first information received by the terminal, that the terminal adopts the first TA as uplink timing for the target cell.

After acquiring a value of the first TA, the terminal may start a time alignment timer (TAT). During an operation of the TAT, the terminal may consider the value of the first TA to be valid and perform uplink transmission using the value of the first TA. How to make the terminal and the network device keep the same effective duration for the first TA is a problem to be solved. Therefore, in some embodiments, the method of an embodiment may further include: determining, the terminal, a start time point of an uplink synchronization timer corresponding to the first TA. Thus, by agreeing or configuring the start time point of the uplink synchronization timer, the terminal and the network device keep the consistent effective duration for the first TA.

In some embodiments, as an example, determining, the terminal, the start time point of the uplink synchronization timer corresponding to the first TA may specifically include: determining the start time point of the uplink synchronization timer corresponding to the first TA according to an n-th time unit after the terminal receives second information; where n is a non-negative integer, such as 0 or a positive integer. The second information includes one of: cell change control signaling; or control signaling instructing the terminal to start measuring the first TA

In some embodiments, as an example, determining, the terminal, the start time point of the uplink synchronization timer corresponding to the first TA may include: acquiring, by the terminal, the first TA, and determining the start time point of the uplink synchronization timer corresponding to the first TA according to the n-th time unit after the terminal receives the second information.

In some embodiments, as an example, determining, the terminal, the start time point of the uplink synchronization timer corresponding to the first TA may include: determining the start time point of the uplink synchronization timer corresponding to the first TA according to an m-th time unit after the terminal fulfills a cell change trigger condition; where m is a non-negative integer, such as 0 or a positive integer.

Based on the above three optional implementations, the time unit may include one of: a symbol; a slot; a subframe; a system frame; or a millisecond.

For example, when adopting the "terminal measurement-based TA calculation" procedure, the termina determine, according to the agreement, the start time point of the uplink synchronization timer (such as TAT) corresponding to the TA (i.e., the first TA) for the target cell.

The "start time point" includes any of the following cases.

Case 1, an n-th "time unit" after receiving a "mobility control command". For example, the terminal receives the mobility control command at a time point t1, where n is a fixed value in the protocol agreement (such as 5 slots), then the terminal starts the TAT at a time point "t1+n", where n may be 0 or any positive integer. The "time unit" may include any one of: the symbol; the slot; the subframe; the system frame; or the millisecond. The "mobility control command" includes any of: "cell change control signaling" during an LTM procedure; or a control command for instructing the terminal to start the "terminal measurement-based TA calculation" procedure.

Case 2, the n-th "time unit" after receiving the "mobility control command" if the terminal acquires the TA value available for the target cell. For example, if the terminal cannot acquire the "downlink reception timing difference between the source cell and the target cell" through measurement, the terminal cannot calculate the TA value for the target cell, and the terminal does not start the TAT of the target cell. For example, if the TA value of the source cell of the terminal is no longer available (for example, the TAT corresponding to the TA value of the source cell expires), the terminal cannot calculate the TA value of the target cell, and the terminal does not start the TAT of the target cell.

Case 3, the m-th "time unit" after a mobility procedure triggered event (e.g., "condition triggered mobility procedure") is satisfied. For example, the terminal satisfies the mobility procedure triggered event at a time point t2, where m is a fixed value in the protocol agreement (e.g., 6 slots), then the terminal starts the TAT at a time point "t2+m", where m may be 0 or any positive integer. The "time unit" may include any one of: the symbol; the slot; the subframe; the system frame; or the millisecond.

In some embodiments, the method of an embodiment may further include: indicating to a network the start time point of the uplink synchronization timer corresponding to the first TA. For example, the terminal may indicate to the network the start time point of its TAT so that the terminal and the network device keep the consistent effective duration for the first TA.

In some embodiments, the method of an embodiment may further include: determining, by the terminal, an execution time interval during which the terminal measures the first TA. For example, after adopting the "terminal measurement-based TA calculation" procedure, the terminal determines a time interval for executing the "terminal measurement-based TA calculation". For example, before the mobility procedure (such as cell handover) is performed successfully, the terminal continuously calculates the latest TA value for the target cell, thus, the latest TA value is acquired.

In some examples, as an example, determining the execution time interval during which the terminal measures the first TA includes: continuously measuring, by the terminal, a latest first TA for the target cell before the terminal performs a cell change successfully. For example, before the mobility procedure is performed successfully, the terminal performs the "terminal measurement-based TA calculation" (e.g., during the operation of a T304 timer).

In some examples, as an example, determining the execution time interval during which the terminal measures the first TA includes: continuously measuring, by the terminal, a latest first TA for the target cell within a first time period configured by a network. For example, the terminal performs the "terminal measurement-based TA calculation" within the time period configured by the network, such as a control duration timer of the "terminal measurement-based TA calculation" configured by the network. When the terminal starts the "terminal measurement-based TA calculation", the "control duration timer" is started, and during the operation of the "control duration timer", the terminal performs the "terminal measurement-based TA calculation".

In a specific application scenario, the terminal may fail to measure the TA. After a failure to measure the TA by the terminal occurs, how to further process such failure is a technical problem that needs to be solved. Therefore, in some embodiments, the method of an embodiment may further include: determining that the terminal fails to acquire the first TA, and triggering the terminal to perform recovery. An agreed failure recovery procedure may be used to enable the terminal to be able to reestablish a connection after a failure of the "terminal measurement-based TA calculation". For example, after the terminal starts the "terminal measurement-based TA calculation" procedure, if the terminal fails to acquire the TA for the target cell, the terminal performs the recovery procedure.

In some embodiments, determining that the terminal fails to acquire the first TA, that is, a determination condition that the terminal determines that "acquiring the TA of the target cell fails", includes one of the following items (F1 to F5).

F1, the terminal fails to acquire the first TA within a second time period configured by the network; for example, the terminal fails to acquire the TA for the target cell within the time period configured by the network.

F2, the terminal fails acquire the first TA during a cell change process; the terminal fails to acquire the TA for the target cell during the mobility procedure (for example, fails to acquire the TA for the target cell before the T304 timer expires).

F3, a measured signal quality of the target cell is below a fifth threshold; for example, the signal measurement result of the RSRP or the RSRQ of the target cell is below a threshold.

F4, a TAT corresponding to the first TA expires; for example, a TAT corresponding to the TA for the target cell expires.

F5, a TAT corresponding to a second TA of the terminal in a source cell expires, for example, the TAT corresponding to the TA for the source cell expires.

In some embodiments, triggering the terminal to perform the recovery, i.e., the recovery procedure, includes one of the following items (G1 to G4):
G1, triggering the terminal to access the target cell using a random access process;
G2, triggering the terminal to perform connection reestablishment;
G3, triggering the terminal to perform a cell change using a second candidate configuration, in which the second candidate configuration is different from the first candidate configuration; for example, the mobility procedure is performed by using other "candidate configurations";
G4, triggering the terminal to report failure information to a network, (e.g., for the MCG change, MCG failure information is reported (e.g., via the SCG)) (e.g., for the SCG change, SCG failure information is reported (e.g., via the MCG)) (e.g., if a failure to acquire the TA for the target cell occurs before the mobility procedure is started, the terminal reports the failure information via a source serving cell) (e.g., report the failure information during a connection reestablishment procedure).

For example, if the terminal fails to acquire the TA for the target cell during the mobility procedure (F2 above), the terminal may choose to restart T304 when executing G1; or not restart T304, etc., which may be determined according to actual needs.

For example, if the terminal fails to acquire the TA for the target cell before triggering the mobility operation (i.e., no handover command is received or the handover triggering condition is not satisfied), it is necessary to adopt the recovery procedure shown in G1, G3, or G4 above after triggering the mobility operation for this target cell.

In some embodiments, the reporting failure information in G4 above may include at least one of the following items (H1 to H8):
H1, an indication of a failure to acquire the first TA, such as, an indication of a failure to acquire the TA for the target cell;
H2, a cause of a failure to acquire the first TA, such as, a cause of a failure to acquire the TA for the target cell;
H3, an indication of whether a second TA of the terminal in a source cell is invalid, such as, an indication of whether the TA for the source cell is invalid;
H4, a cause of a second TA being invalid, such as a cause of the TA for the source cell being invalid;
H5, an identifier of the target cell;
H6, an identifier of a source cell;
H7, an identifier of the first candidate configuration;
H8, an indication of whether a downlink reception timing difference between a source cell and the target cell is acquired, for example, an indication of whether the "downlink reception timing difference between the source cell and the target cell" is acquired.

In some examples, the cause of the failure to acquire the TA for the target cell may include at least one of:
the TA for the source cell being invalid (see below, "the cause of the TA for the source cell being invalid"); the TAT corresponding to the TA for the target cell expiring; the measured signal quality of the target cell being below the threshold; or failing to acquire the "downlink reception timing difference between the source cell and the target cell".

In some examples, the cause of the TA for the source cell being invalid may include at least one of:
the TAT corresponding to the TA for the source cell expiring; or a timing difference between a plurality of timing advance groups (TAGs) of the source cell exceeding a threshold.

In some embodiments, the method of an embodiment may further include: triggering the terminal to stop measuring the first TA. For example, it may be agreed that when the terminal triggers the "recovery procedure", the terminal stops the "terminal measurement-based TA calculation", to save resource consumption.

This embodiment provides a solution for processing uplink timing. Through network configuration or protocol agreement, in a mobility procedure (such as PCell or PSCell change), the terminal is controlled to use terminal measurement-based TA calculation in a specific cell. By agreeing or configuring the start time of the uplink synchronization timer, the terminal and the network side may keep the same effective duration for the TA. And by agreeing on a failure recovery procedure, the terminal may re-establish a connection after the TA calculation fails.

To illustrate a specific execution process of a terminal, FIG. 4 illustrates a flowchart of a communication processing method according to an embodiment of the disclosure. The method may be performed by the terminal side and may include a step 301.

At step 301, it is determined, based on a first TA, a TA of a terminal in a target cell corresponding to a first candidate configuration.

The first TA is a TA for the target cell measured by the terminal.

In some embodiments of the disclosure, the step 301 includes: checking, according to a protocol agreement or a network configuration, that a cell configuration of the terminal is changed to the first candidate configuration, and determining, based on the first TA, the TA of the terminal in the target cell.

In some embodiments of the disclosure, checking, according to the protocol agreement or the network configuration, that the cell configuration of the terminal is changed to the first candidate configuration, and determining, based on the first TA, the TA of the terminal in the target cell includes: determining, according to a source cell of the terminal and the target cell belonging to the same configuration group, that the terminal adopts the first TA as uplink timing for the target cell.

In some embodiments of the disclosure, checking, according to the protocol agreement or the network configuration, that the cell configuration of the terminal is changed to the first candidate configuration, and determining, based on the first TA, the TA of the terminal in the target cell includes: determining, according to received first information, that the terminal adopts the first TA as uplink timing for the target cell, in which the first information includes one of: cell change control signaling, in which the cell change control signaling includes indication information instructing the terminal to adopt the first TA as the uplink timing for the target cell; control signaling instructing the terminal to start measuring the first TA; or a triggering event instructing the terminal to start measuring the first TA.

In some embodiments of the disclosure, the triggering event includes one of: a signal measurement result of the target cell being greater than or equal to a first threshold value configured by a network; a signal measurement result of a source cell of the terminal being less than or equal to a second threshold value configured by a network; a signal measurement result of the target cell being greater than or equal to a third threshold value configured by a network, and a signal measurement result of a source cell being less than or equal to a fourth threshold value configured by the network; or a difference between a signal measurement result of the target cell and a signal measurement result of a source cell being greater than or equal to a difference configured by a network.

In some embodiments of the disclosure, the target cell includes one of: a primary cell (PCell) corresponding to an MCG after an MCG change; a primary secondary cell (PSCell) corresponding to an SCG after an SCG change; or a changed cell specified by a network configuration.

In some embodiments of the disclosure, a source cell of the terminal includes one of: a PCell corresponding to an MCG before an MCG change; a PSCell corresponding to an SCG before an SCG change; a PCell corresponding to a current serving MCG; a PSCell corresponding to a current serving SCG; or a pre-change cell specified by a network configuration.

In some embodiments of the disclosure, the method further includes: determining a start time point of an uplink synchronization timer corresponding to the first TA.

In some embodiments of the disclosure, determining the start time point of the uplink synchronization timer corresponding to the first TA includes: determining the start time point of the uplink synchronization timer corresponding to the first TA according to an n-th time unit after the terminal receives second information; where n is a non-negative integer, such as 0 or a positive integer, and the second information includes one of: cell change control signaling; or control signaling instructing the terminal to start measuring the first TA.

In some embodiments of the disclosure, determining the start time point of the uplink synchronization timer corresponding to the first TA according to the n-th time unit after the terminal receives the second information includes: acquiring, by the terminal, the first TA, and determining the start time point of the uplink synchronization timer corresponding to the first TA according to the n-th time unit after the terminal receives the second information.

In some embodiments of the disclosure, determining the start time point of the uplink synchronization timer corresponding to the first TA includes: determining the start time point of the uplink synchronization timer corresponding to the first TA according to an m-th time unit after the terminal fulfills a cell change trigger condition; where m is a non-negative integer, such as 0 or a positive integer.

In some embodiments of the disclosure, the time unit includes one of: a symbol; a slot; a subframe; a system frame; or a millisecond.

In some embodiments of the disclosure, the method further includes: indicating to a network the start time point of the uplink synchronization timer corresponding to the first TA.

In some embodiments of the disclosure, the method further includes: determining an execution time interval during which the terminal measures the first TA.

In some embodiments of the disclosure, determining the execution time interval during which the terminal measures the first TA includes: continuously measuring, by the terminal, a latest first TA for the target cell before the terminal performs a cell change successfully.

In some embodiments of the disclosure, determining the execution time interval during which the terminal measures the first TA includes: continuously measuring, by the terminal, a latest first TA for the target cell within a first time period configured by a network.

In some embodiments of the disclosure, the method further includes: determining that the terminal fails to acquire the first TA, and triggering the terminal to perform recovery.

In some embodiments of the disclosure, determining that the terminal fails to acquire the first TA includes one of: the terminal failing to acquire the first TA within a second time period configured by the network; the terminal failing to acquire the first TA during a cell change process; a measured signal quality of the target cell being below a fifth threshold; a TAT corresponding to the first TA expiring; or a TAT corresponding to a second TA of the terminal in a source cell expiring.

In some embodiments of the disclosure, triggering the terminal to perform recovery includes one of: triggering the terminal to access the target cell using a random access process; triggering the terminal to perform connection reestablishment; triggering the terminal to perform a cell change using a second candidate configuration, wherein the second candidate configuration is different from the first candidate configuration; or triggering the terminal to report failure information to a network.

In some embodiments of the disclosure, the failure information includes at least one of: an indication of a failure to acquire the first TA; a cause of a failure to acquire the first TA; an indication of whether a second TA of the terminal in a source cell is invalid; a cause of a second TA being invalid; an identifier of the target cell; an identifier of a source cell; an identifier of the first candidate configuration; or an indication of whether a downlink reception timing difference between a source cell and the target cell is acquired.

In some embodiments of the disclosure, the method further includes: triggering the terminal to stop measuring the first TA.

In some embodiments of the disclosure, determining the first TA includes: determining the first TA according to a second TA of the terminal in a source cell and a downlink reception timing difference between the source cell and the target cell.

In some embodiments of the disclosure, the method further includes: receiving the first candidate configuration provided by a network.

For the description of a specific example in this embodiment, reference may be made to the corresponding description of the embodiments in FIG. 1 to FIG. 4, which is not repeated herein.

This embodiment provides a solution for processing uplink timing. Through network configuration or protocol agreement, in a mobility procedure (such as PCell or PSCell change), the terminal is controlled to use terminal measurement-based TA calculation in a specific cell. By agreeing or configuring the start time of the uplink synchronization timer, the terminal and the network side may keep the same effective duration for the TA. And by agreeing on a failure recovery procedure, the terminal may re-establish a connection after the TA calculation fails.

To illustrate a specific execution process of a network device, FIG. 5 illustrates a flowchart of a communication processing method according to an embodiment of the disclosure. The method may be performed by the network device and may include a step 401.

At step 401, the network device sends first information.

The first information indicates to determine, based on a first TA, a TA of a terminal in a target cell corresponding to a first candidate configuration; in which the first TA is a TA for the target cell measured by the terminal.

In some embodiments of the disclosure, the first information includes one of: cell change control signaling, wherein the cell change control signaling comprises indication information instructing the terminal to adopt the first TA as the uplink timing for the target cell; control signaling instructing the terminal to start measuring the first TA; or a triggering event instructing the terminal to start measuring the first TA.

In some embodiments of the disclosure, the triggering event includes one of: a signal measurement result of the target cell being greater than or equal to a first threshold value configured by a network; a signal measurement result of a source cell of the terminal being less than or equal to a second threshold value configured by a network; a signal measurement result of the target cell being greater than or equal to a third threshold value configured by a network, and a signal measurement result of a source cell being less than or equal to a fourth threshold value configured by the network; or a difference between a signal measurement result of the target cell and a signal measurement result of a source cell being greater than or equal to a difference configured by a network.

In some embodiments of the disclosure, the target cell includes one of: a primary cell (PCell) corresponding to an MCG after an MCG change; a primary secondary cell (PSCell) corresponding to an SCG after an SCG change; or a changed cell specified by a network configuration.

In some embodiments of the disclosure, a source cell of the terminal includes one of: a PCell corresponding to an MCG before an MCG change; a PSCell corresponding to an SCG before an SCG change; a PCell corresponding to a current serving MCG; a PSCell corresponding to a current serving SCG; or a pre-change cell specified by a network configuration.

In some embodiments of the disclosure, the method further includes: receiving, by the network device, a start time point of an uplink synchronization timer corresponding to the first TA indicated by the terminal.

In some embodiments of the disclosure, the method further includes: receiving, by the network device, failure information reported by the terminal.

In some embodiments of the disclosure, the failure information includes at least one of: an indication of a failure to acquire the first TA; a cause of a failure to acquire the first TA; an indication of whether a second TA of the terminal in a source cell is invalid; a cause of a second TA being invalid; an identifier of the target cell; an identifier of a source cell; an identifier of the first candidate configuration; or an indication of whether a downlink reception timing difference between a source cell and the target cell is acquired.

In some embodiments of the disclosure, the method further includes: providing, by the network device, the first candidate configuration to the terminal.

For the description of a specific example in this embodiment, reference may be made to the corresponding description of the embodiments in FIG. 1 to FIG. 5, which is not repeated herein.

This embodiment provides a solution for processing uplink timing. Through network configuration or protocol agreement, in a mobility procedure (such as PCell or PSCell change), the terminal is controlled to use terminal measurement-based TA calculation in a specific cell. By agreeing or configuring the start time of the uplink synchronization timer, the terminal and the network side may keep the same effective duration for the TA. And by agreeing on a failure recovery procedure, the terminal may re-establish a connection after the TA calculation fails.

In the above embodiments of the disclosure, the methods according to the embodiments of the disclosure are described from the perspectives of the terminal and the network device, respectively. In order to realize each of functions in the methods according to the above embodiments of the disclosure, the terminal and the network device may include a hardware structure, a software module, and realize each of the above functions in the form of the hardware structure, the software module, or a combination of the hardware structure and the software module. A certain function of the above functions may be performed in the form of the hardware structure, the software module, or the combination of the hardware structure and the software module.

Corresponding to the communication processing method provided in the embodiments described above, the disclosure also provides a communication processing apparatus. Since the communication processing apparatus provided in embodiments of the disclosure corresponds to the communication processing method provided in the embodiments described above, an implementation of the communication processing method is also applicable to the communication processing apparatus provided in the embodiments, which is not described in detail in the following embodiments.

FIG. 6 is a block diagram illustrating a communication processing apparatus according to an embodiment of the disclosure. The communication processing apparatus may be configured in a terminal.

As illustrated in FIG. 6, the apparatus includes a first communication module 51. The first communication module 51 is configured to determine, based on a first TA, a TA of a terminal in a target cell corresponding to a first candidate configuration. The first TA is a TA for the target cell measured by the terminal.

In some embodiments of the disclosure, the first communication module 51 is configured to: check, according to a protocol agreement or a network configuration, that a cell configuration of the terminal is changed to the first candidate configuration, and determine, based on the first TA, the TA of the terminal in the target cell.

In some embodiments of the disclosure, the first communication module 51 is configured to: determine, according to a source cell of the terminal and the target cell belonging to the same configuration group, that the terminal adopts the first TA as uplink timing for the target cell.

In some embodiments of the disclosure, the first communication module 51 is configured to: determine, according to received first information, that the terminal adopts the first TA as uplink timing for the target cell, in which the first information includes one of: cell change control signaling, in which the cell change control signaling includes indication information instructing the terminal to adopt the first TA as the uplink timing for the target cell; control signaling instructing the terminal to start measuring the first TA; or a triggering event instructing the terminal to start measuring the first TA.

In some embodiments of the disclosure, the first communication module 51 is configured as that the triggering event includes one of: a signal measurement result of the target cell being greater than or equal to a first threshold value configured by a network; a signal measurement result of a source cell of the terminal being less than or equal to a second threshold value configured by a network; a signal measurement result of the target cell being greater than or equal to a third threshold value configured by a network, and a signal measurement result of a source cell being less than or equal to a fourth threshold value configured by the network; or a difference between a signal measurement result of the target cell and a signal measurement result of a source cell being greater than or equal to a difference configured by a network.

In some embodiments of the disclosure, the first communication module 51 is configured as that the target cell includes one of: a primary cell (PCell) corresponding to a master cell group (MCG) after an MCG change; a primary secondary cell (PSCell) corresponding to a secondary cell group (SCG) after an SCG change; or a changed cell specified by a network configuration.

In some embodiments of the disclosure, the first communication module 51 is configured as that a source cell of the terminal includes one of: a PCell corresponding to an MCG before an MCG change; a PSCell corresponding to an SCG before an SCG change; a PCell corresponding to a current serving MCG; a PSCell corresponding to a current serving SCG; or a pre-change cell specified by a network configuration.

In some embodiments of the disclosure, the first communication module 51 is configured to determine a start time point of an uplink synchronization timer corresponding to the first TA.

In some embodiments of the disclosure, the first communication module 51 is configured to: determine the start time point of the uplink synchronization timer corresponding to the first TA according to an n-th time unit after the terminal receives second information; where n is a non-negative integer, such as 0 or a positive integer, and the second information includes one of: cell change control signaling; or control signaling instructing the terminal to start measuring the first TA.

In some embodiments of the disclosure, the first communication module 51 is configured: acquire, by the terminal, the first TA, and determine the start time point of the uplink synchronization timer corresponding to the first TA according to the n-th time unit after the terminal receives the second information.

In some embodiments of the disclosure, the first communication module 51 is configured to: determine the start time point of the uplink synchronization timer corresponding to the first TA according to an m-th time unit after the terminal fulfills a cell change trigger condition; where m is a non-negative integer, such as 0 or a positive integer.

In some embodiments of the disclosure, the first communication module 51 is configured as that the time unit includes one of: a symbol; a slot; a subframe; a system frame; or a millisecond.

In some embodiments of the disclosure, the first communication module 51 is configured to: indicate to a network the start time point of the uplink synchronization timer corresponding to the first TA.

In some embodiments of the disclosure, the first communication module 51 is configured to determine an execution time interval during which the terminal measures the first TA.

In some embodiments of the disclosure, the first communication module 51 is configured to: continuously measure, by the terminal, a latest first TA for the target cell before the terminal performs a cell change successfully.

In some embodiments of the disclosure, the first communication module 51 is configured to continuously measure, by the terminal, a latest first TA for the target cell within a first time period configured by a network.

In some embodiments of the disclosure, the first communication module 51 is configured to determine that the terminal fails to acquire the first TA, and triggering the terminal to perform recovery.

In some embodiments of the disclosure, the first communication module 51 is configured as that determining that the terminal fails to acquire the first TA includes one of: the terminal failing to acquire the first TA within a second time period configured by the network; the terminal failing to acquire the first TA during a cell change process; a measured signal quality of the target cell being below a fifth threshold; a TAT corresponding to the first TA expiring; or a TAT corresponding to a second TA of the terminal in a source cell expiring.

In some embodiments of the disclosure, the first communication module 51 is configured as that triggering the terminal to perform recovery includes one of: triggering the terminal to access the target cell using a random access process; triggering the terminal to perform connection reestablishment; triggering the terminal to perform a cell change using a second candidate configuration, wherein the second candidate configuration is different from the first candidate configuration; or triggering the terminal to report failure information to a network.

In some embodiments of the disclosure, the first communication module 51 is configured as that the failure information includes at least one of: an indication of a failure to acquire the first TA; a cause of a failure to acquire the first TA; an indication of whether a second TA of the terminal in a source cell is invalid; a cause of a second TA being invalid; an identifier of the target cell; an identifier of a source cell; an identifier of the first candidate configuration; or an indication of whether a downlink reception timing difference between a source cell and the target cell is acquired.

In some embodiments of the disclosure, the first communication module 51 is configured to trigger the terminal to stop measuring the first TA.

In some embodiments of the disclosure, the first communication module 51 is configured to determine the first TA according to a second TA of the terminal in a source cell and a downlink reception timing difference between the source cell and the target cell.

In some embodiments of the disclosure, the first communication module 51 is configured to receive the first candidate configuration provided by a network.

This embodiment provides a solution for processing uplink timing. Through network configuration or protocol agreement, in a mobility procedure (such as PCell or PSCell change), the terminal is controlled to use terminal measurement-based TA calculation in a specific cell. By agreeing or configuring the start time of the uplink synchronization timer, the terminal and the network side may keep the same effective duration for the TA. And by agreeing on a failure recovery procedure, the terminal may re-establish a connection after the TA calculation fails.

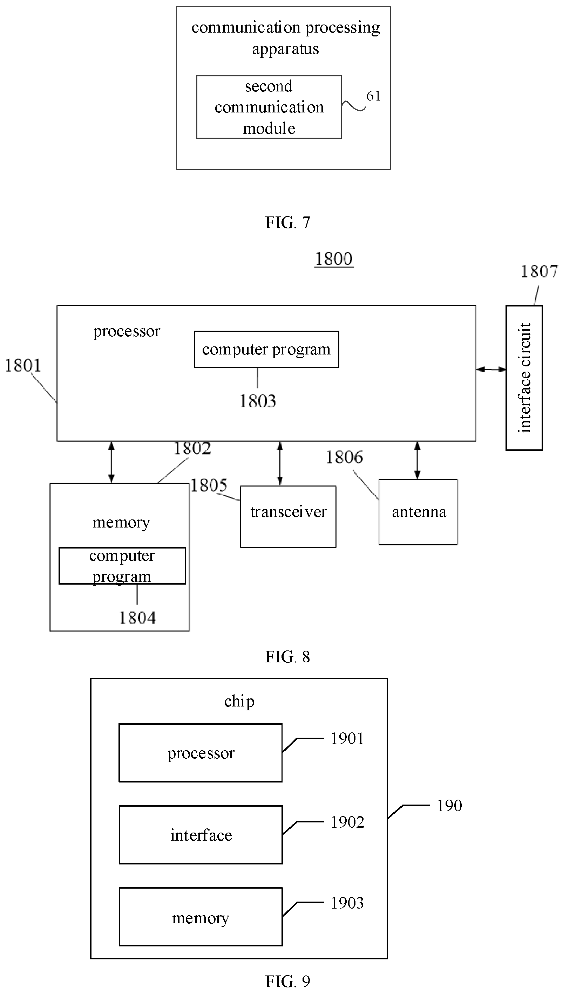

FIG. 7 is a block diagram illustrating a communication processing apparatus according to an embodiment of the disclosure. The communication processing apparatus may be configured in a network device side.

As illustrated in FIG. 7, the apparatus includes a second communication module 61. The second communication module 61 is configured to send first information. The first information indicates to determine, based on a first TA, a TA of a terminal in a target cell corresponding to a first candidate configuration. The first TA is a TA for the target cell measured by the terminal.

In some embodiments of the disclosure, the second communication module 61 is configured as that the first information includes one of: cell change control signaling, wherein the cell change control signaling comprises indication information instructing the terminal to adopt the first TA as the uplink timing for the target cell; control signaling instructing the terminal to start measuring the first TA; or a triggering event instructing the terminal to start measuring the first TA.

In some embodiments of the disclosure, the second communication module 61 is configured as that the triggering event includes one of: a signal measurement result of the target cell being greater than or equal to a first threshold value configured by a network; a signal measurement result of a source cell of the terminal being less than or equal to a second threshold value configured by a network; a signal measurement result of the target cell being greater than or equal to a third threshold value configured by a network, and a signal measurement result of a source cell being less than or equal to a fourth threshold value configured by the network; or a difference between a signal measurement result of the target cell and a signal measurement result of a source cell being greater than or equal to a difference configured by a network.

In some embodiments of the disclosure, the second communication module 61 is configured as that the target cell includes one of: a primary cell (PCell) corresponding to an MCG after an MCG change; a primary secondary cell (PSCell) corresponding to an SCG after an SCG change; or a changed cell specified by a network configuration.

In some embodiments of the disclosure, the second communication module 61 is configured as that a source cell of the terminal includes one of: a PCell corresponding to an MCG before an MCG change; a PSCell corresponding to an SCG before an SCG change; a PCell corresponding to a current serving MCG; a PSCell corresponding to a current serving SCG; or a pre-change cell specified by a network configuration.

In some embodiments of the disclosure, the second communication module 61 is configured to receive a start time point of an uplink synchronization timer corresponding to the first TA indicated by the terminal.

In some embodiments of the disclosure, the second communication module 61 is configured to receive failure information reported by the terminal.

In some embodiments of the disclosure, the second communication module 61 is configured as that the failure information includes at least one of: an indication of a failure to acquire the first TA; a cause of a failure to acquire the first TA; an indication of whether a second TA of the terminal in a source cell is invalid; a cause of a second TA being invalid; an identifier of the target cell; an identifier of a source cell; an identifier of the first candidate configuration; or an indication of whether a downlink reception timing difference between a source cell and the target cell is acquired.

In some embodiments of the disclosure, the second communication module 61 is configured to provide the first candidate configuration to the terminal.

This embodiment provides a solution for processing uplink timing. Through network configuration or protocol agreement, in a mobility procedure (such as PCell or PSCell change), the terminal is controlled to use terminal measurement-based TA calculation in a specific cell. By agreeing or configuring the start time of the uplink synchronization timer, the terminal and the network side may keep the same effective duration for the TA. And by agreeing on a failure recovery procedure, the terminal may re-establish a connection after the TA calculation fails.

Referring to FIG. 8, FIG. 8 is a schematic diagram illustrating a structure of a communication device 1800 according to an embodiment of the disclosure. The communication device 1800 may be a network device, a terminal, or a chip, a system on chip or a processor that supports the network device to implement the method, or a chip, a system on chip or a processor that supports the terminal to implement the method. The device may be configured to implement the method described in the method embodiments, and reference may be made to descriptions in the method embodiments.

The communication device 1800 may include one or more processors 1801. The processor 1801 may include a general purpose processor or a dedicated processor. For example, the processor 1801 may be a baseband processor or a central processor. The baseband processor may be configured to process a communication protocol and communication data, and the central processor may be configured to control a communication device (e.g., a base station, a baseband chip, a terminal, a terminal chip, a DU or CU, etc.), to execute a computer program, and process data of the computer program.

In an example, the communication device 1800 may further include one or more memories 1802 with a computer program 1804 stored thereon. The memory 1802 executes the computer program 1804 so that the communication device 1800 performs the method as described in the above method embodiments. The memory 1802 may further store data. The communication device 1800 and the memory 1802 may be independently configured or integrated together.

In an example, the communication device 1800 may further include a transceiver 1805 and an antenna 1806. The transceiver 1805 may be referred to as a transceiving unit, a transceiver or a transceiving circuit, which may be configured to achieve a transceiving function. The transceiver 1805 may include a receiver and a transmitter. The receiver may be referred to as a receiver or a receiving circuit, etc., for implementing a receiving function; the transmitter may be referred to as a transmitter or a transmission circuit, etc. for implementing a transmission function.

In an example, the communication device 1800 may further include one or more interface circuits 1807. The interface circuit 1807 is configured to receive code instructions and transmit the code instructions to the processor 1801. The processor 1801 runs the code instructions so that the communication device 1800 performs the method according to the above method embodiments.

In an implementation, the processor 1801 may include a transceiver configured to implement receiving and transmitting functions. For example, the transceiver may be a transceiving circuit, or an interface, or an interface circuit. The transceiving circuit, the interface or the interface circuit configured to implement receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In an implementation, the processor 1801 may store a computer program 1803 which, when running on the processor 1801, causes the communication device 1800 to perform the method described in the above method embodiments. The computer program 1803 may be fixed in the processor 1801, in which case the processor 1801 may be implemented by hardware.

In an implementation, the apparatus 1800 may include a circuit that may implement a transmitting or receiving or communication function in the above method embodiments. The processor and the transceiver described in the present disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe) and gallium arsenide (GaAs).

The communication device described in the above embodiments may be a network device or a terminal, but the scope of the communication device described in the present disclosure is not limited thereto, and a structure of the communication device may not be subject to FIG. 8. The communication device may be a stand-alone device or may be a part of a larger device. For example, the communication device may be:
(1) a stand-alone integrated circuit (IC), or a chip, or a system on chip or a subsystem;
(2) a set of one or more ICs, optionally, which may also include a storage component for storing data and a computer program;
(3) an ASIC, such as a Modem;
(4) a module that may be embedded within other devices;
(5) a receiver, a terminal, a smart terminal, a cellular phone, a wireless device, a handset, a mobile unit, a vehicle device, a network device, a cloud device, an artificial intelligence device, etc.; and
(6) others, and so forth.

In a case that a communication device may be a chip or a system on chip, reference may be made to a schematic diagram illustrating a structure of a chip as illustrated in FIG. 9. The chip illustrated in FIG. 9 includes a processor 1901 and an interface 1902, in which the number of processors 1901 may be one or more and the number of interfaces 1902 may be more than one.

In an example, the chip further includes a memory 1903, configured to save a necessary computer program and data.

Those skilled in the related art may understand that various illustrative logical blocks and steps listed in embodiments of the present disclosure may be implemented by electronic hardware, computer software or a combination of electronic hardware and computer software. Whether the function is implemented by hardware or software depends on specific applications and design requirements for an overall system. Those skilled in the art may implement the functions by using various methods for each specific application, but such an implementation should not be understood as beyond the protection scope of embodiments of the present disclosure.

A readable storage medium with instructions stored thereon is further provided in the disclosure. When the instructions are executed by a computer, steps in any one of the method embodiments are implemented.

A computer program product is further provided in the disclosure. The computer program product implements functions of any one of the above method embodiments when executed by a processor.

In the above embodiments, the functions may be wholly or partially implemented by software, hardware, firmware, or any combination thereof. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in present disclosure are distinguished merely for convenience of description, and are not intended to limit the scope of embodiments of the disclosure, but also to indicate an order of precedence.

At least one in the present disclosure may also be described as one or more, and a plurality of may be two, three, four or more, which is not limited in the present disclosure. In embodiments of the present disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

As used herein, terms "machine-readable medium" and "computer-readable medium" refer to any computer program product, device, and/or apparatus (e.g., a disk, an optical disk, a memory, a programmable logic device (PLD)) for providing machine instructions and/or data to a programmable processor, which includes a machine-readable medium that receives the machine instructions as a machine-readable signal. The term "machine-readable signal" refers to any signal for providing the machine instructions and/or data to the programmable processor.

Systems and techniques described herein may be implemented in a computing system that includes a back-end component (e.g., as a data server), or a computing system that includes a middleware component (e.g., an application server), or a computing system that includes a front-end component (e.g., a user computer with a graphical user interface or a web browser via which a user can interact with implementations of the systems and techniques described herein), or a computing system that includes any combination of such back-end component, middleware component, or front-end component. The components of the system may be interconnected by any form or medium of digital data communication (e.g., a communication network). Examples of communication networks include: a local area network (LAN), a wide area network (WAN), and the Internet.

A computer system may include a client and a server. The client and the server are generally remote from each other and usually interact via a communication network. A relationship of client and server is generated by computer programs running on respective computers and having a client-server relationship to each other.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

In addition, it should be understood that the respective embodiments described in the present disclosure may be implemented independently or in combination with other embodiments when the solution allows.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, for the specific working processes of the systems, apparatuses, and units described above reference may be made to the corresponding processes in the preceding method embodiments, and will not be repeated herein.

The above implementations are only specific implementations of the disclosure, but the scope of protection of the disclosure is not limited thereto. Those skilled in the art familiar to this technical field can easily think of changes or substitutions in the technical scope disclosed by the disclosure, which shall be covered by the scope of protection of the disclosure. Therefore, the scope of protection of the disclosure shall be governed by the scope of protection of the stated claims.

## Claims

1. A communication processing method, comprising:
determining, based on a first timing advance (TA), a TA of a terminal in a target cell corresponding to a first candidate configuration;
wherein the first TA is a TA for the target cell measured by the terminal.

2. The method according to claim 1, wherein determining, based on the first TA, the TA of the terminal in the target cell corresponding to the first candidate configuration comprises:
checking, according to a protocol agreement or a network configuration, that a cell configuration of the terminal is changed to the first candidate configuration, and determining, based on the first TA, the TA of the terminal in the target cell.

3. The method according to claim 2, wherein checking, according to the protocol agreement or the network configuration, that the cell configuration of the terminal is changed to the first candidate configuration, and determining, based on the first TA, the TA of the terminal in the target cell comprises:
determining, according to a source cell of the terminal and the target cell belonging to the same configuration group, that the terminal adopts the first TA as uplink timing for the target cell.

4. The method according to claim 2, wherein checking, according to the protocol agreement or the network configuration, that the cell configuration of the terminal is changed to the first candidate configuration, and determining, based on the first TA, the TA of the terminal in the target cell comprises:
determining, according to received first information, that the terminal adopts the first TA as uplink timing for the target cell,
wherein the first information comprises one of:
cell change control signaling, wherein the cell change control signaling comprises indication information instructing the terminal to adopt the first TA as the uplink timing for the target cell;
control signaling instructing the terminal to start measuring the first TA; or
a triggering event instructing the terminal to start measuring the first TA.

5. The method according to claim 4, wherein the triggering event comprises one of:
a signal measurement result of the target cell being greater than or equal to a first threshold value configured by a network;
a signal measurement result of a source cell of the terminal being less than or equal to a second threshold value configured by a network;
a signal measurement result of the target cell being greater than or equal to a third threshold value configured by a network, and a signal measurement result of a source cell being less than or equal to a fourth threshold value configured by the network; or
a difference between a signal measurement result of the target cell and a signal measurement result of a source cell being greater than or equal to a difference configured by a network.

6. The method according to any one of claims 1 to 5, wherein the target cell comprises one of:
a primary cell (PCell) corresponding to a master cell group (MCG) after an MCG change;
a primary secondary cell (PSCell) corresponding to a secondary cell group (SCG) after an SCG change; or
a changed cell specified by a network configuration.

7. The method according to any one of claims 1 to 6, wherein a source cell of the terminal comprises one of:
a PCell corresponding to an MCG before an MCG change;
a PSCell corresponding to an SCG before an SCG change;
a PCell corresponding to a current serving MCG;
a PSCell corresponding to a current serving SCG; or
a pre-change cell specified by a network configuration.

8. The method according to any one of claims 1 to 7, further comprising:
determining a start time point of an uplink synchronization timer corresponding to the first TA.

9. The method according to claim 8, wherein determining the start time point of the uplink synchronization timer corresponding to the first TA comprises:
determining the start time point of the uplink synchronization timer corresponding to the first TA according to an n-th time unit after the terminal receives second information;
where n is a non-negative integer, and the second information comprises one of:
cell change control signaling; or
control signaling instructing the terminal to start measuring the first TA.

10. The method according to claim 9, wherein determining the start time point of the uplink synchronization timer corresponding to the first TA according to the n-th time unit after the terminal receives the second information comprises:
acquiring, by the terminal, the first TA, and determining the start time point of the uplink synchronization timer corresponding to the first TA according to the n-th time unit after the terminal receives the second information.

11. The method according to claim 8, wherein determining the start time point of the uplink synchronization timer corresponding to the first TA comprises:
determining the start time point of the uplink synchronization timer corresponding to the first TA according to an m-th time unit after the terminal fulfills a cell change trigger condition;
where m is a non-negative integer.

12. The method according to any one of claims 9 to 11, wherein the time unit comprises one of:
a symbol;
a slot;
a subframe;
a system frame; or
a millisecond.

13. The method according to any one of claims 8 to 12, further comprising:
indicating to a network the start time point of the uplink synchronization timer corresponding to the first TA.

14. The method according to any one of claims 8 to 13, further comprising:
determining an execution time interval during which the terminal measures the first TA.

15. The method according to claim 14, wherein determining the execution time interval during which the terminal measures the first TA comprises:
continuously measuring, by the terminal, a latest first TA for the target cell before the terminal performs a cell change successfully.

16. The method according to claim 14, wherein determining the execution time interval during which the terminal measures the first TA comprises:
continuously measuring, by the terminal, a latest first TA for the target cell within a first time period configured by a network.

17. The method according to any one of claims 8 to 16, further comprising:
determining that the terminal fails to acquire the first TA, and triggering the terminal to perform recovery.

18. The method according to claim 16, wherein determining that the terminal fails to acquire the first TA comprises one of:
the terminal failing to acquire the first TA within a second time period configured by the network;
the terminal failing to acquire the first TA during a cell change process;
a measured signal quality of the target cell being below a fifth threshold;
a time alignment timer (TAT) corresponding to the first TA expiring; or
a TAT corresponding to a second TA of the terminal in a source cell expiring.

19. The method according to any one of claims 17 to 18, wherein triggering the terminal to perform recovery comprises one of:
triggering the terminal to access the target cell using a random access process;
triggering the terminal to perform connection reestablishment;
triggering the terminal to perform a cell change using a second candidate configuration, wherein the second candidate configuration is different from the first candidate configuration; or
triggering the terminal to report failure information to a network.

20. The method according to claim 19, wherein the failure information comprises at least one of:
an indication of a failure to acquire the first TA;
a cause of a failure to acquire the first TA;
an indication of whether a second TA of the terminal in a source cell is invalid;
a cause of a second TA being invalid;
an identifier of the target cell;
an identifier of a source cell;
an identifier of the first candidate configuration; or
an indication of whether a downlink reception timing difference between a source cell and the target cell is acquired.

21. The method according to any one of claims 17 to 20, further comprising:
triggering the terminal to stop measuring the first TA.

22. The method according to any one of claims 1 to 21, wherein determining the first TA comprises:
determining the first TA according to a second TA of the terminal in a source cell and a downlink reception timing difference between the source cell and the target cell.

23. The method according to any one of claims 1 to 22, further comprising:
receiving the first candidate configuration provided by a network.

24. A communication processing method, comprising:
sending first information, wherein the first information indicates to determine, based on a first timing advance (TA), a TA of a terminal in a target cell corresponding to a first candidate configuration;
wherein the first TA is a TA for the target cell measured by the terminal.

25. The method according to claim 24, wherein the first information comprises one of:
cell change control signaling, wherein the cell change control signaling comprises indication information instructing the terminal to adopt the first TA as the uplink timing for the target cell;
control signaling instructing the terminal to start measuring the first TA; or
a triggering event instructing the terminal to start measuring the first TA.

26. The method according to claim 25, wherein the triggering event comprises one of:
a signal measurement result of the target cell being greater than or equal to a first threshold value configured by a network;
a signal measurement result of a source cell of the terminal being less than or equal to a second threshold value configured by a network;
a signal measurement result of the target cell being greater than or equal to a third threshold value configured by a network, and a signal measurement result of a source cell being less than or equal to a fourth threshold value configured by the network; or
a difference between a signal measurement result of the target cell and a signal measurement result of a source cell being greater than or equal to a difference configured by a network.

27. The method according to any one of claims 24 to 26, wherein the target cell comprises one of:
a primary cell (PCell) corresponding to a master cell group (MCG) after an MCG change;
a primary secondary cell (PSCell) corresponding to a secondary cell group (SCG) after an SCG change; or
a changed cell specified by a network configuration.

28. The method according to any one of claims 24 to 27, wherein a source cell of the terminal comprises one of:
a PCell corresponding to an MCG before an MCG change;
a PSCell corresponding to an SCG before an SCG change;
a PCell corresponding to a current serving MCG;
a PSCell corresponding to a current serving SCG; or
a pre-change cell specified by a network configuration.

29. The method according to any one of claims 24 to 28, further comprising:
receiving a start time point of an uplink synchronization timer corresponding to the first TA indicated by the terminal.

30. The method according to any one of claims 24 to 29, further comprising:
receiving failure information reported by the terminal.

31. The method according to claim 30, wherein the failure information comprises at least one of:
an indication of a failure to acquire the first TA;
a cause of a failure to acquire the first TA;
an indication of whether a second TA of the terminal in a source cell is invalid;
a cause of a second TA being invalid;
an identifier of the target cell;
an identifier of a source cell;
an identifier of the first candidate configuration; or
an indication of whether a downlink reception timing difference between a source cell and the target cell is acquired.

32. The method according to any one of claims 24 to 31, further comprising:
providing the first candidate configuration to the terminal.

33. A communication processing apparatus, comprising:
a first communication module, configured to determine, based on a first timing advance (TA), a TA of a terminal in a target cell corresponding to a first candidate configuration;
wherein the first TA is a TA for the target cell measured by the terminal.

34. A communication processing apparatus, comprising:
a second communication module, configured to send first information, wherein the first information indicates to determine, based on a first timing advance (TA), a TA of a terminal in a target cell corresponding to a first candidate configuration; wherein the first TA is a TA for the target cell measured by the terminal.

35. A communication processing system, comprising a terminal and a network device, wherein
the terminal is configured to perform the method according to any one of claims 1 to 23;
the network device is configured to perform the method according to any one of claims 24 to 32.

36. A communication device, comprising: a transceiver; a memory; a processor, coupled to the transceiver and the memory, configured to execute computer executable instructions on the memory, control wireless signal reception and transmission of the transceiver, and capable of implementing any one of the methods of claims 1 to 32.

37. A computer storage medium, configured to store computer executable instructions which, when executed by a processor, cause the method according to any one of claims 1 to 32 to be implemented.
